# EUROPÄISCHE PATENTSCHRIFT

(11) **EP 1 147 269 B1**
(45) Veröffentlichungstag und Bekanntmachung des Hinweises auf die Patenterteilung: **04.06.2003**
(21) Anmeldenummer: 00901559.5
(22) Anmeldetag: 14.01.2000
(51) Int. Cl.: E04C 5/07, B29C 53/56

(54) **VERFAHREN ZUR HERSTELLUNG VON AUS FLACHBANDLAMELLEN BESTEHENDEN WINKELFÖRMIGEN BAUTEILEN**
METHOD FOR PRODUCING ANGULAR COMPONENTS CONSISTING OF FLAT-STRIP LAMINATED SECTIONS
PROCEDE DE PRODUCTION D'ELEMENTS ANGULAIRES A BASE DE LAMELLES DE BANDE PLATE

(30) Priorität: 29.01.1999 DE 19903681
(43) Veröffentlichungstag der Anmeldung: 24.10.2001
(73) Patentinhaber: Sika Schweiz AG, 8048 Zürich (CH)
(72) Erfinder: BLEIBLER, Alexander, CH-8406 Winterthur (CH)
(74) Vertreter: Wolf, Eckhard, Dr.-Ing.
(86) Internationale Anmeldenummer: EP0000252
(87) Internationale Veröffentlichungsnummer: WO00045009

(56) Entgegenhaltungen:
- WO-A-98/32933
- CH-A- 350 433
- GB-A- 1 320 912
- US-A- 2 594 838
- US-A- 4 020 202
- US-A- 4 177 306
- US-A- 5 112 422

## Beschreibung

Die Erfindung bezieht sich auf ein Verfahren zur Herstellung von aus Flachbandlamellen bestehenden winkelförmigen Bauteilen, die zur Verstärkung von lastaufnehmenden oder lastübertragenden Bauteilen bestimmt sind.

Winkelförmige Verstärkungslamellen dieser Art sind beispielsweise bekannt aus der WO98/32933, der US 4020 202 A und der US 2594 838 A. Die Flachbandlamellen weisen eine Vielzahl von parallel zueinander ausgerichtete, biegsame oder biegeschlaffe Tragfasem auf, die in eine Bindemittelmatrix aus duroplastischem oder thermoplastischem Kunststoff eingebettet sind. Die steifelastische Bindemittelmatrix läßt keine Biegungen mit kleinen Biegeradien zu. Um eine kantenübergreifende Verstärkung von Bauteilen zu ermöglichen, werden vorgefertigte Winkellamellen verwendet (W098/32933), die zwei im Bereich einer quer zur Längserstrekkung der Tragfasem verlaufenden Querkante einstückig miteinander verbundene. einen definierten Winkel von 30° bis 150° miteinander einschließende Lamellenschenkel aufweisen. Da die zu verstärkenden Bauteilkanten überwiegend rechtwinklig ausgebildet sind, schließen die Lamellenschenkel vorzugsweise einen Winkel von 90° miteinander ein. Um über die Querkante hinweg Zugkräfte ohne Bruchgefahr übertragen zu können, wird die Querkante zwischen den Lamellenschenkeln zweckmäßig mit einem Krümmungsradius von 5 bis 50 mm, vorzugsweise 15 bis 30 mm, gekrümmt ausgebildet. Für die Herstellung derartiger Winkellamellen wurden in der WO98/32933 mehrere Möglichkeiten vorgeschlagen:

1. Eine langgestreckte Flachbandlamelle mit durchgehender Bindemittelmatrix wird in einem Zwischenbereich bei einer Temperatur von 300 bis 600 °C unter Bildung zweier über eine Querkante miteinander verbundener, einen Winkel miteinander einschließender Lamellenschenkel einer Biegepressung ausgesetzt und anschließend unter zeitweiliger Aufrechterhaltung der Preßkraft auf Gebrauchstemperatur abgekühlt. Bei diesem Verfahren wird als nachteilig empfunden, daß im Kantenbereich außenseitig Zugkräfte und innenseitig Druckkräfte auftreten, die zu einer unerwünschten Verformung und Wellenbildung im Kantenbereich führen können. Dies gilt vor allem beim Biegen von Flachbandlamellen mit duroplastischer Bindemittelmatrix.
- Ein aus Tragfasem bestehender Faserstrang wird auf einem Stützkörper mit quadratischem oder rechteckigem Umriß spiralig aufgewickelt und an diesem im aufgewickelten Zustand fixiert. Anschließend wird der aufgewickelte Faserstrang unter Bildung der Bindemittelmatrix mit einem flüssigen Kunstharz getränkt Das Kunstharz wird dabei unter Bildung eines als Vierkantrohr ausgebildeten Verbundmaterialrohrs ausgehärtet, das unter Bildung von Winkellamellen mit über Eck in Richtung ihrer Längserstrekkung verlaufenden Tragfasem mehrfach quer und längs aufgetrennt wird. Bei dieser Verfahrensweise wird als nachteilig empfunden, daß die Tragfasern beim Aufwickelvorgang zu Bruch gehen können und bei der anschließenden Beaufschlagung mit Bindemittel unvollständig in die Bindemittelmatrix eingebettet werden. Die Festigkeitseigenschaften des Endprodukts sind daher erheblichen Schwankungen unterworfen.
- Eine weitere bekannte Verfahrensweise besteht darin, daß die zunächst eine durchgehende Bindemittelmatrix aufweisende Flachbandlamelle in mindestens einem Zwischenbereich auf Zersetzungstemperatur des Bindemittels erhitzt und dabei die Bindemittelmatrix unter Freilegung der Tragfasem entfernt wird. Die so vorbereitete Flachbandlamelle kann mit den freigelegten Tragfasem um eine Festkörperkante gebogen und zuvor oder danach mit flüssigem, aushärtbarem Kunststoff getränkt werden. Auch hier besteht die Gefahr, daß es zu Verletzungen in den freigelegten Tragfasem kommt, die zu Einbußen in der Zugfestigkeit des winkelförmigen Bauteils führen können.

Ausgehend hiervon liegt der Erfindung die Aufgabe zugrunde, ein Verfahren zur Herstellung von aus Flachbandlamellen bestehenden winkelförmigen Bauteilen zu entwickeln, dessen Verfahrenserzeugnisse reproduzierbare Festigkeitseigenschaften aufweisen.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt die Erkenntnis zugrunde, daß einlagige Schichten aus parallel ausgerichteten Tragfasem, die gegebenenfalls mit einem gewissen Anteil Querfasem verwoben sein können, relativ einfach in einen Bindemittelfilm eingebettet werden können, so daß sie ohne Beschädigungsgefahr leichter handhabbar werden. Dementsprechend wird gemäß der Erfindung vorgeschlagen, daß mehrere in einen Bindemittelfilm eingebettete einlagige Tragfaserschichten breitflächig übereinander auf einen mindestens eine Formkante aufweisenden Formkörper aufgezogen, aufgewickelt oder aufgedrückt werden, daß die Bindemittelfilme unter Einwirkung von Druck und/oder Wärme gegeneinander gepreßt und dabei breitflächig miteinander verbunden werden und daß das so gebildete Verbundteil nach dem Aushärten des Bindemittels vom Formkörper abgenommen und in winkelförmige Bauteile mit vorgegebener Schenkellänge und -breite aufgeteilt wird.

Eine erste Ausführungsvariante der Erfindung sieht vor, daß die mit den einlagigen Tragfaserschichten bewehrten Bindemittelfilme in zugeschnittener Form an ihrer Biegestelle übereinander über eine Außenkante des Fomnkörpers gezogen werden. Gemäß einer zweiten Lösungsaltemative werden die mit den einlagigen Tragfaserschichten bewehrten Bindemittelfilme in zugeschnittener Form an ihrer Biegestelle übereinander gegen eine Innenkante des Formkörpers gedrückt.

Vorteilhafterweise ist das duroplastische Bindemittel beim Aufziehen oder Aufdrücken des Bindemittelfilms auf den Formkörper teilweise ausgehärtet und dabei noch klebrig und biegsam. Das duroplastische Bindemittel wird hierbei unter Einwirkung von Druck und Wärme ausgehärtet.

Im Falle der Verwendung eines thermoplastischen Bindemittels ist der mit den Tragfasem bewehrte Bindemittelfilm beim Aufziehen oder Aufdrücken auf den Formkörper verformbar und vorzugsweise trocken. Die Bindemittelfilme werden unter Einwirkung von Druck und Wärme auf den Erweichungsoder Schmelzpunkt des Bindemittels erhitzt und miteinander verbunden. Das unter Verwendung eines thermoplastischen Bindemittels hergestellte fertige Bauteil kann jederzeit durch einfaches Erhitzen verformt werden.

Eine weitere Lösungsalternative sieht vor, daß der mit einer einlagigen Tragfaserschicht bewehrte Bindemittelfilm in Form einer Bahn oder eines Bandes mehrlagig auf einen mit Formkanten versehenen Balken aufgewikkelt wird, daß die Wickellagen unter Einwirkung von Druck und Wärme flächig miteinander verbunden werden und daß der Wickel nach dem Aushärten des vorzugsweise thermoplastischen Bindemittels unter Bildung der winkelförmigen Bauteile in geeigneter Weise aufgetrennt wird.

Im folgenden wird die Erfindung anhand der in der Zeichnung in schematischer Weise dargestellten Ausführungsbeispiele näher erläutert. Es zeigen
- Fig. 1: eine als Winkellamelle ausgebildete Flachbandlamelle in schaubildlicher Darstellung;
- Fig. 2: ein mit Tragfasern bewehrter Bindemittelfilm für die Herstellung der Winkellamelle nach Fig. 1;
- Fig. 3: eine Seitenansicht einer Vorrichtung zur Herstellung von Winkellamellen nach Fig 1 unter Versendung von Bindemittelfilmen nach Fig. 2;
- Fig. 4: eine Seitenansicht einer gegenüber Fig. 3 abgewandelten Vorrichtung zur Herstellung von Winkellamellen unter Verwendung von Bindemittelfilmen;
- Fig. 5a: bis c ein Schema zur Erläuterung eines weiteren Verfahrens für die Herstellung von Winkellamellen gemäß Fig. 1.

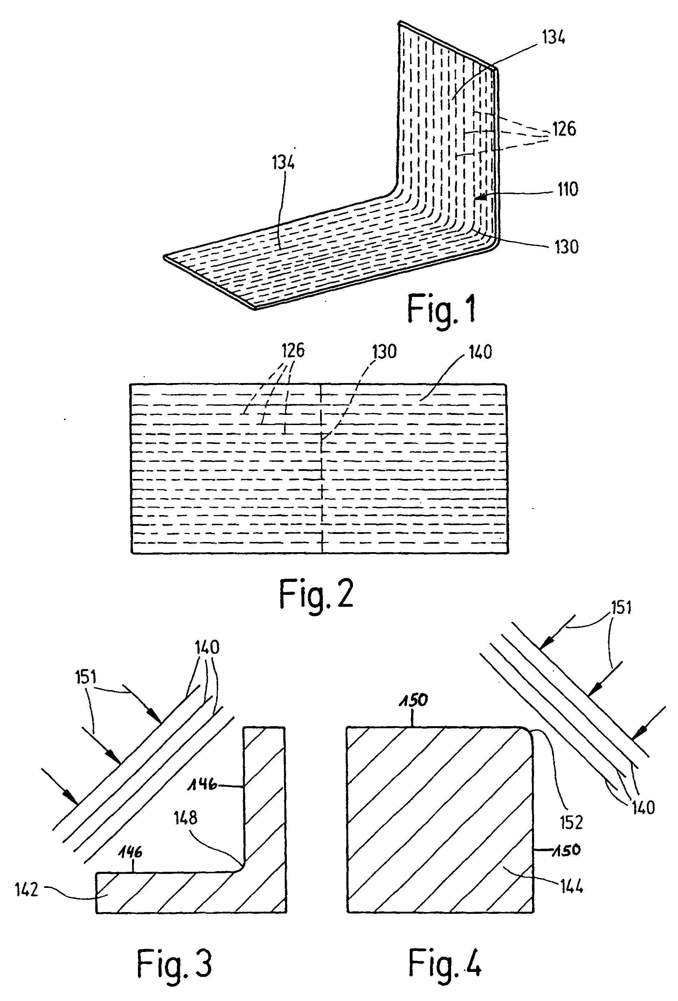

Die in Fig. 1 dargestellte Flachbandlamelle ist als vorgefertigte Winkellamelle 110 ausgebildet, die zur Verstärkung von lastaufnehmenden oder lastübertragenden Bauteilen bestimmt ist. Die Winkellamelle 110 weist zwei im Bereich einer quer zur Längserstreckung der Tragfasern 126 verlaufenden, abgerundeten Querkante 130 einstückig miteinander verbundene, einen Winkel von 90° miteinander einschließende Lamellenschenkel 134 auf. Der Krümmungsradius im Bereich der Querkante 130 beträgt beispielsweise 5 bis 50 mm. Für die Herstellung der Winkellamellen 110 gibt es verschiedene Möglichkeiten:

Alle in der Folge erläuterten Herstellungsvarianten gehen von einem Zwischenprodukt aus, das aus einer einlagigen Schicht aus unidirektional, parallel zueinander ausgerichteten Tragfasem 126 besteht, die gegebenenfalls mit einem gewissen Anteil Querfasern verwoben sind und die in einen Bindemittelfilm 140 eingebettet sind. Als Tragfasern 126 werden vornehmlich Kohlenstoffasern verwendet, die sich durch einen hohen Elastizitätsmodul auszeichnen. Die Tragfasern und/oder die Querfasem können aber auch Aramidfasern, Glasfasern, Polypropylenfasem und dergleichen enthalten oder aus diesen bestehen. Das Bindemittel in dem Bindemittelfilm 140 besteht zweckmäßig aus einem Duroplast, beispielsweise aus Epoxidharz, Polyurethanharz, Acrylharz oder Polyesterharz, das für die nachfolgend beschriebene Bearbeitung zwar schon vorgehärtet, aber noch nicht ausgehärtet ist. Der mit den Tragfasem bewehrte Bindemitteiflm ist bei der Bearbeitung noch biegsam, das Bindemittel ist noch klebrig.

Grundsätzlich ist es möglich, auch thermoplastische Kunststoffe als Bindemittel in dem Bindemittelfilm zu verwenden. Auch in diesem Falle sollte der Bindemitteffilm für die Bearbeitung ausreichend biegsam sein.

Die Fig. 3 und 4 zeigen je einen Formkörper 142,144 zur Herstellung von Winkellamellen 110 aus geeignet zugeschnittenen, mit einer einlagigen Tragfaserschicht 126 bewehrten Bindemittelfilmen 140 der in Fig. 2 gezeigten Art. Der Formkörper 142 nach Fig. 3 weist zwei zueinander senkrechte Formflächen 146 auf, die über eine innere konkave Formkante 148 miteinander verbunden sind. Zur Herstellung einer Winkellamelle werden die tragfaserbewehrten Bindemittelfilme 140 in Richtung der Pfeile 151 nacheinander gegen die Formflächen 146 und die Formkante 148 gedrückt und dort unter Einwirkung von Druck und Wärme flächig miteinander verbunden. Die Verbindung erfolgt im Falle der duroplastischen Bindemittelfilme durch Aushärten des Bindemittels unter der Einwirkung von Druck und Wärme und im Falle der thermoplastischen Bindemittelfilme durch Temperaturerhöhung auf Erweichungstemperatur des Bindemittels unter der Einwirkung von Druck und Wärme. Das auf diese Weise hergestellte Verbundteil kann nach dem Aushärten in die Winkellamellen 110 mit den gewünschten Maßen zugeschnitten werden.

Der in Fig. 4 gezeigte Formkörper weist zwei zueinander senkrechte Formflächen 150 auf, die über eine äußere, konvexe Formkante 152 miteinander verbunden sind. Zur Herstellung der Winkellamellen 110 werden die mit einer einlagigen Tragfaserschicht bewehrten Bindemittelfilme 140 nacheinander über die Formkante 152 auf die Formflächen 150 gezogen, bis die gewünschte Wandstärke erreicht ist. Sodann werden die Bindemittelfilme in der vorstehend erläuterten Weise unter der Einwirkung von Druck und Wärme miteinander verbunden und weiterverarbeitet.

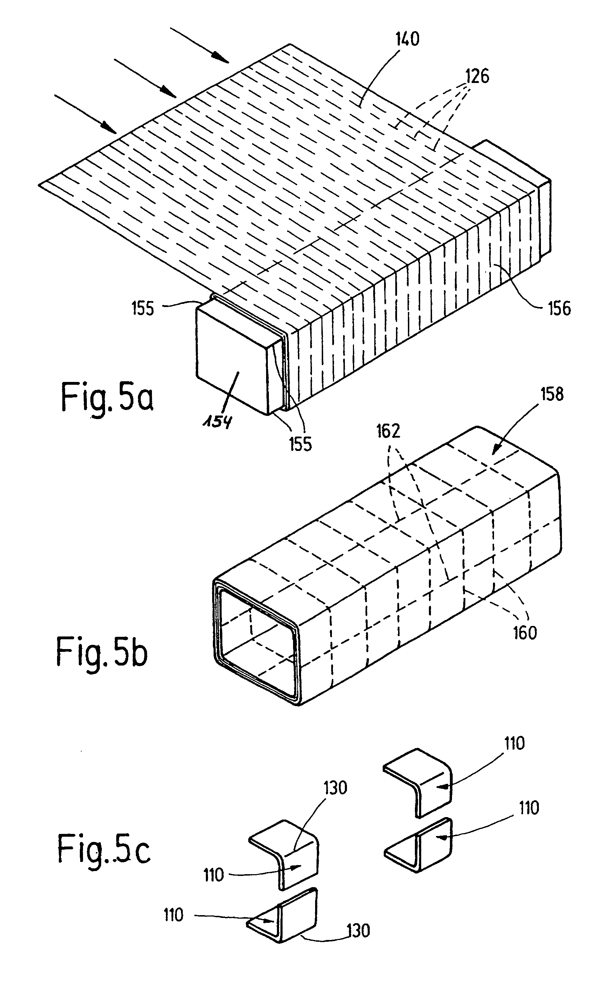

Eine weitere Herstellungsvariante wird anhand der Fig. 5a bis c erläutert: Ein mit einer einlagigen Tragfaserschicht 126 bewehrter Bindemittelfilm 140 wird in einer zusammenhängenden Bahn auf einen Formkörper 154 mit quadratischem Querschnitt und Formkanten 155 unter Bildung eines mehrlagigen Wickels 156 aufgewickelt. Sodann werden die übereinanderliegenden Lagen des Wickels unter der Einwirkung von Druck und Wärme miteinander verbunden. Nach dem Aushärten des Bindemittels entsteht ein als Vierkantrohr ausgebildetes Verbundteil 158, das vom Formkörper 154 abgenommen werden kann (Fig. 5b). Das Vierkantrohr kann sodann entlang den Schnittlinien 160 und 162 so aufgetrennt werden, daß Winkellamellen 110 entstehen (Fig. 5c), bei denen die Tragfasem 126 im Sinne der Fig. 1 über die Kante 130 hinweg in Richtung ihrer Längserstreckung verlaufen.

Zusammenfassend ist folgendes festzuhalten: Die Erfindung bezieht sich auf ein Verfahren zur Herstellung von aus Flachbandlamellen bestehenden winkeiförmigen Bauteilen, die zur nachträglichen Verstärkung von Betonbauwerken bestimmt sind. Bei dem erfindungsgemäßen Verfahren werden mehrere in einen Bindemittelfilm 140 eingebettete einlagige Tragfaserschichten breitflächig übereinander auf einen mindestens eine Formkante 148,152,155 aufweisenden Formkörper 142,144,154 aufgezogen, aufgewickelt oder aufgedrückt und unter der Einwirkung von Druck und Wärme gegeneinander gepreßt und dabei breitflächig miteinander verbunden. Das so gebildete Verbundteil 158 wird nach dem Aushärten des Bindemittels vom Formkörper abgenommen und in die winkelförmigen Bauteile 110 mit vorgegebener Schenkellänge und/oder -breite aufgeteilt.

## Patentansprüche

1. Verfahren zur Herstellung von aus Flachbandlamellen bestehenden winkelförmigen Bauteilen (110), bei welchem eine Vielzahl von parallel zueinander ausgerichteten biegsamen oder biegeschlaffen Tragfasem (126), die gegebenenfalls mit Querfasem verwoben sind, in einer aushärtbaren Bindemittelmatrix aus duroplastischem oder thermoplastischem Kunststoff eingebettet und im Bereich einer quer zur Längserstreckung der Tragfasem verlaufenden Querkante (130) unter einem definierten Winkel von 30° bis 150°, vorzugsweise von 90° formhaltig gebogen werden, **dadurch gekennzeichnet, daß** mehrere in einem Bindemittelfilm (140) eingebettete einlagige Tragfaserschichten (126) breitflächig übereinander auf einen mindestens eine Formkante (148,152,155) aufweisenden Formkörper (142,144,154) aufgezogen, aufgewickelt oder aufgedrückt werden, daß die Bindemittelfilme (140) unter Einwirkung von Druck und/oder Wärme gegeneinander gepreßt und dabei breitflächig miteinander verbunden werden, und daß das so gebildete Verbundteil (158) nach dem Aushärten des Bindemittels vom Formkörper abgenommen und in winkelförmige Bauteile (110) mit vorgegebener Schenkellänge und/oder -breite aufgeteilt wird.

2. Verfahren nach Anspruch 1, **dadurch gekennzeichnet, daß** die mit den einlagigen Tragfaserschichten (126) bewehrten Bindemittelfilme (140) in zugeschnittener Form an ihrer Biegestelle (130) übereinander über eine äußere Formkante (152) des Formkörpers (144) gezogen werden.

3. Verfahren nach Anspruch 1, **dadurch gekennzeichnet, daß** die mit den einlagigen Tragfaserschichten (126) bewehrten Bindemittelfilme (140) in zugeschnittener Form mit ihrer Biegestelle (130) übereinander gegen eine innere Formkante (148) des Formkörpers (142) gedrückt werden.

4. Verfahren nach einem der Ansprüche 1 bis 3, **dadurch gekennzeichnet, daß** das duroplastische Bindemittel beim Aufziehen oder Aufdrücken des Bindemittelfilms (140) auf den Formkörper (142,144) teilweise ausgehärtet, aber noch klebrig und biegsam ist.

5. Verfahren nach Anspruch 4, **dadurch gekennzeichnet, daß** das duroplastische Bindemittel auf dem Formkörper (142,144) unter Einwirkung von Druck und Wärme ausgehärtet wird.

6. Verfahren nach einem der Ansprüche 1 bis 3, **dadurch gekennzeichnet, daß** das thermoplastische Bindemittel beim Aufziehen oder Aufdrücken des Bindemittelfilms (140) verformbar und vorzugsweise trocken ist, und daß die Bindemittelfilme (140) unter Einwirkung von Druck und Wärme auf die Erweichungs- oder Schmelztemperatur des Bindesmittels erhitzt und miteinander verbunden werden.

7. Verfahren nach Anspruch 1, **dadurch gekennzeichnet, daß** der die einlagige Tragfaserschicht (126) enthaltende Bindemittelfilm (140) in Form einer Bahn oder eines Bandes mehrlagig auf einen mit Formkanten (155) versehenen balkenförmigen Formkörper (154) aufgewickelt wird, daß die Wickellagen unter Einwirkung von Druck und Wärme flächig miteinander verbunden werden und daß der Wickel (156,158) nach dem Aushärten des vorzugsweise thermoplastischen Bindemittels unter Bildung der winkelförmigen Bauteile (110) mit über Eck in Richtung ihrer Längserstreckung verlaufenden Tragfasem (126) vorzugsweise mehrfach quer und längs aufgetrennt wird.

8. Verfahren nach Anspruch 7, **dadurch gekennzeichnet, daß** der Wickel (158) vor dem Auftrennen vom Formkörper (154) abgenommen wird.

## Claims

1. Process for production of angular components (110) comprised of flat-strip lamella, in which a plurality of parallel-oriented flexible or bendable reinforcing fibers (126), which may be interwoven with transverse fibers, are embedded in a hardenable binder matrix of a duraplastic or thermoplastic material and are form-retentively bent, in the area of a transverse edge (130) running transverse to the longitudinal direction of the reinforcing fiber, at a defined angle of 30° to 150°, preferably 90°, thereby characterized, that multiple single-layer reinforcing fiber layers (126) individually embedded in a binder matrix film (140) are drawn, wound or pressed with their broad surfaces against each other upon a shape body (142, 144, 154) exhibiting at least one forming edge (148, 152, 155), that the binder matrix films (140) are pressed against each other under the influence of pressure and/or heat and thereby surface-bonded with each other, and that the thus formed composite part (158) after hardening of the binder is removed from the shape body and separated into angular components (110) with predetermined shank lengths and/or breadth.

2. Process according to Claim 1, thereby characterized, that the binder matrix films (140) reinforced with the single layer reinforcing fiber layers (126) are tailored in shape and at their bending point (130) are drawn over each other and over a convex forming edge (152) of the shape body (144).

3. Process according to Claim 1, thereby characterized, that the binder matrix films (140) reinforced with the single layer reinforcing fiber layers (126) are tailored in shape and at their bending point (130) are pressed upon each other and against a concave forming edge (148) of the shape body (142).

4. Process according to one of Claims 1 through 3, thereby characterized, that the duraplastic binder during drawing or pressing of the binder matrix film (140) upon the shape body (142, 144) is partially hardened, yet still adhesive and flexible.

5. Process according to Claim 4, thereby characterized, that the duraplastic binder is hardened while on the shape body (142, 144) under the influence of pressure and heat.

6. Process according to one of Claims 1 through 3, thereby characterized, that the thermoplastic binder during heating or pressing of the binder matrix film (140) is deformable and preferably dry, and that the binder matrix film (140) is heated to the softening or melting temperature of the binder under the influence of pressure and heat and that the films are bonded to each other.

7. Process according to Claim 1, thereby characterized, that the binder matrix film (140) containing the single layer reinforcing fiber layer (126) is wound in the manner of a ribbon or a band in multiple layers upon a shape body (154) in the shape of a beam provided with shaped edges (155), that the winding is surface bonded to itself other under the influence of pressure and heat and that the winding (156, 158) after the hardening of the preferably thermoplastic binder is separated preferably multiple times transversely and longitudinally with formation of angular components (110) with reinforcing fibers (126) extending in their longitudinal direction over the edge.

8. Process according to Claim 7, thereby characterized, that the winding (158) is removed from the shape body (154) prior to separation.

## Revendications

1. Procédé de fabrication d'éléments angulaires (110) constitués de lamelles de bande plate, selon lequel une multiplicité de fibres porteuses (126) flexibles ou molles en flexion, orientées parallèlement entre elles, qui sont éventuellement entrelacées avec des fibres transversales, sont noyées dans une matrice de liant durcissable constituée de matière plastique thermodurcissable ou de matière thermoplastique et sont, dans la région d'une arête transversale (130) s'étendant transversalement au développement longitudinal des fibres porteuses, pliées avec maintien de la forme sous un angle défini de 30° à 150°, de préférence de 90°, **caractérisé en ce que** plusieurs couches simples de fibres porteuses (126), noyées dans un film de liant (140), sont tirées, enroulées ou pressées, en étant superposées sur toute leur surface, sur un corps de formage (142, 144, 154) présentant au moins une arête de formage (148, 152, 155), **en ce que** les films de liant (140) sont pressés les uns contre les autres sous l'action de pression et/ou de chaleur et sont alors assemblés entre eux sur toute leur surface, et **en ce que** l'élément composite (158) ainsi formé est, une fois le liant durci, retiré du corps de formage et divisé en éléments angulaires (110) ayant une longueur et/ou une largeur prédéfinie de branches.

2. Procédé selon la revendication 1, **caractérisé en ce que** les films de liant (140) armés des couches simples de fibres porteuses (126), sous une forme coupée à dimension, sont, les uns au-dessus des autres, tirés avec leur zone de flexion (130) sur une arête de formage extérieure (152) du corps de formage (144).

3. Procédé selon la revendication 1, **caractérisé en ce que** les films de liant (140) armés des couches simples de fibres porteuses (126), sous une forme coupée à dimension, sont, les uns au-dessus des autres, pressés avec leur zone de flexion (130) contre une arête de formage intérieure (148) du corps de formage (142).

4. Procédé selon l'une des revendications 1 à 3, **caractérisé en ce que** le liant thermodurcissable est partiellement durci lors du tirage ou de la pression du film de liant (140) sur le corps de formage (142, 144), mais encore visqueux et flexible.

5. Procédé selon la revendication 4, **caractérisé en ce que** le liant thermodurcissable est durci sur le corps de formage (142, 144) sous l'action de pression et de chaleur.

6. Procédé selon l'une des revendications 1 à 3, **caractérisé en ce que** le liant thermoplastique est déformable et de préférence sec lors de l'application par tirage ou par pression du film de liant (140), et **en ce que** les films de liant (140) sont, sous l'action de pression et de chaleur, chauffés à la température de ramollissement ou de fusion du liant et assemblés entre eux.

7. Procédé selon la revendication 1, **caractérisé en ce que** le film de liant (140) contenant la couche simple de fibres porteuses (126), sous la forme d'une bande ou d'une feuille continue, est enroulé en plusieurs couches sur un corps de formage (154) en forme de barre pourvu d'arêtes de formage (155), **en ce que** les couches d'enroulement sont assemblées entre elles en pleine surface sous l'action de pression et de chaleur, et **en ce que** l'enroulement (156, 158) est, à la suite du durcissement du liant de préférence thermoplastique, sectionné de préférence plusieurs fois transversalement et longitudinalement, formant ainsi les éléments angulaires (110) pourvus de fibres porteuses (126) s'étendant en angle dans la direction de leur développement longitudinal.

8. Procédé selon la revendication 7, **caractérisé en ce que** l'enroulement (158) est retiré du corps de formage (154) avant d'être sectionné.
